# FASCICULE DE BREVET EUROPEEN

(11) **EP 1 174 064 B1**
(45) Date de publication et mention de la délivrance du brevet: **11.05.2005**
(21) Numéro de dépôt: 01440228.3
(22) Date de dépôt: 18.07.2001
(51) Int. Cl.: A47J 36/12

(54) **Couvercle de cocotte ou analogue**
Deckel für Kochtöpfe
Cover for cooking pots

(30) Priorité: 19.07.2000 FR 0009487
(43) Date de publication de la demande: 23.01.2002
(73) Titulaire: Staub (Société Anonyme), 68230 Turckheim (FR)
(72) Inventeur: Staub, Francis, 68230 Turckheim (FR)
(74) Mandataire: Nuss, Pierre

(56) Documents cités:
- EP-A- 0 998 869
- DE-A- 19 701 984
- DE-C- 832 191
- DE-U- 29 503 504
- FR-A- 996 169

## Description

La présente invention concerne le domaine de la fabrication d'ustensiles ménagers, en particulier de cuisson, et a pour objet un couvercle de cocotte ou analogue muni d'un dispositif de retenue sur ladite cocotte en position d'accès à l'intérieur de celle-ci.

Les ustensiles ménagers destinés à la cuisson, tels que les faitouts, les poêles ou les casseroles, sont généralement équipés de couvercles destinés à favoriser la cuisson en retenant dans lesdits ustensiles, d'une part, la chaleur de la cuisson et, d'autre part, les vapeurs dégagées par les aliments lors de la cuisson et qui se condensent sur la face interne des couvercles pour retomber sur lesdits aliments ou dans le fond des ustensiles sous forme de jus de cuisson.

Actuellement, une intervention dans ces ustensiles, pendant la cuisson, nécessite un déplacement du couvercle et son dépôt à proximité, sur l'appareil de cuisson ou sur un plan de travail proche, afin de permettre une libération des deux mains pour l'intervention proprement dite.

Cependant, ces manoeuvres du couvercle, habituelles à ce jour, nécessitent un dépôt du couvercle, qui entraîne des salissures de l'environnement de l'appareil de cuisson, du fait de l'écoulement des jus de cuisson de la face interne du couvercle sur les surfaces de réception de ce dernier.

Ce dépôt des jus de cuisson sur des surfaces de plan de travail ou autre entraîne, en outre, la perte de ces derniers et une dissolution forcée du jus restant dans les ustensiles de cuisson, de sorte que la qualité desdits jus est amoindrie.

Le document EP-A-998 869 propose un couvercle de cocotte ou analogue pouvant être retenue sur ladite cocotte en position d'accès à l'intérieur de celle-ci.

A cet effet, le couvercle de cocotte ou analogue est muni d'au moins un dispositif de retenue sur ladite cocotte en position d'accès à l'intérieur de celle-ci.

L'invention sera mieux comprise, grâce à la description ci-après, qui se rapporte à un mode de réalisation préféré, donné à titre d'exemple non limitatif, et expliqué avec référence aux dessins schématiques annexés, dans lesquels :
la figure 1 est une vue en perspective d'un couvercle de cocotte pourvu du couvercle conforme à l'invention, en position levée sur ladite cocotte ;
la figure 2 est une vue en coupe du couvercle, et
la figure 3 est une vue en plan dudit couvercle.

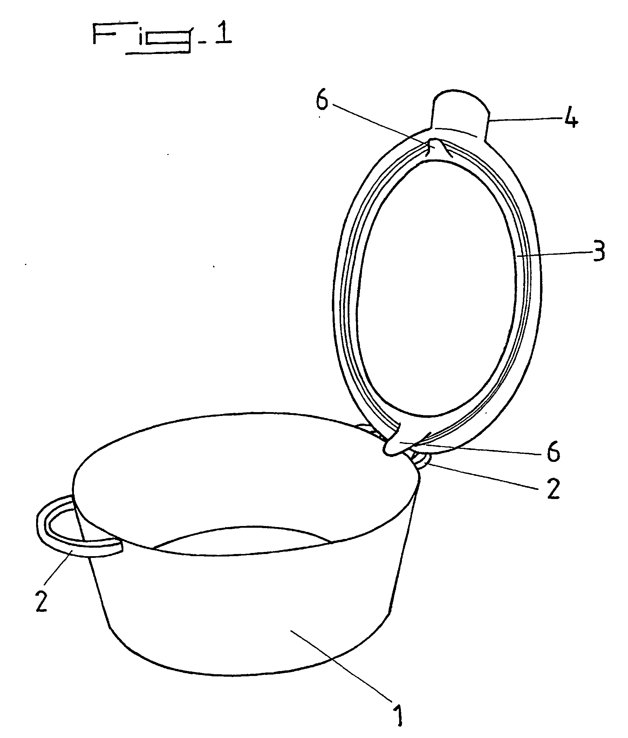

La figure 1 des dessins annexés représente une cocotte 1 munie de poignées latérales 2 et d'un couvercle 3. Le couvercle 3 de la cocotte 1 est muni d'au moins un dispositif 4 de retenue sur ladite cocotte 1 en position d'accès à l'intérieur de celle-ci.

Ce dispositif 4 de retenue du couvercle 3 sur la cocotte 1 est sous forme d'une patte latérale en saillie sur la périphérie dudit couvercle 3 et présente une section transversale inférieure à la section transversale d'une poignée latérale 2. Ainsi, comme il ressort plus particulièrement de la figure 1 des dessins annexés, il est possible, pour accéder à l'intérieur de la cocotte 1, de disposer le couvercle 3, par l'intermédiaire du dispositif de retenue 4 formé par la patte latérale, dans une position légèrement inclinée par rapport à la verticale, vers l'extérieur de la cocotte 1 et au-dessus de celle-ci. Il en résulte que pour vérifier un état de cuisson ou pour rapporter des ingrédients à l'intérieur de la cocotte, le couvercle peut, après avoir été soulevé au moyen de sa poignée 3', être accroché dans l'une des poignées 2 de la cocotte, de sorte qu'il ne nécessite plus d'être disposé sur une surface annexe au plan de cuisson, tel qu'un plan de travail ou autre.

De préférence et comme le montrent les figures 1 à 3 des dessins annexés, le couvercle 3 est pourvu de deux moyens 4 de retenue sous forme de pattes diamétralement opposées par rapport à sa poignée 3'. Une telle prévision de deux moyens de retenue diamétralement opposés facilite la manière d'accrochage du couvercle 3, du fait que l'utilisateur pourra indifféremment accrocher ledit couvercle à l'une ou à l'autre poignée de la cocotte, sans nécessiter une demi-rotation dudit couvercle 3 en fonction de ses prédisposition de droitier ou de gaucher.

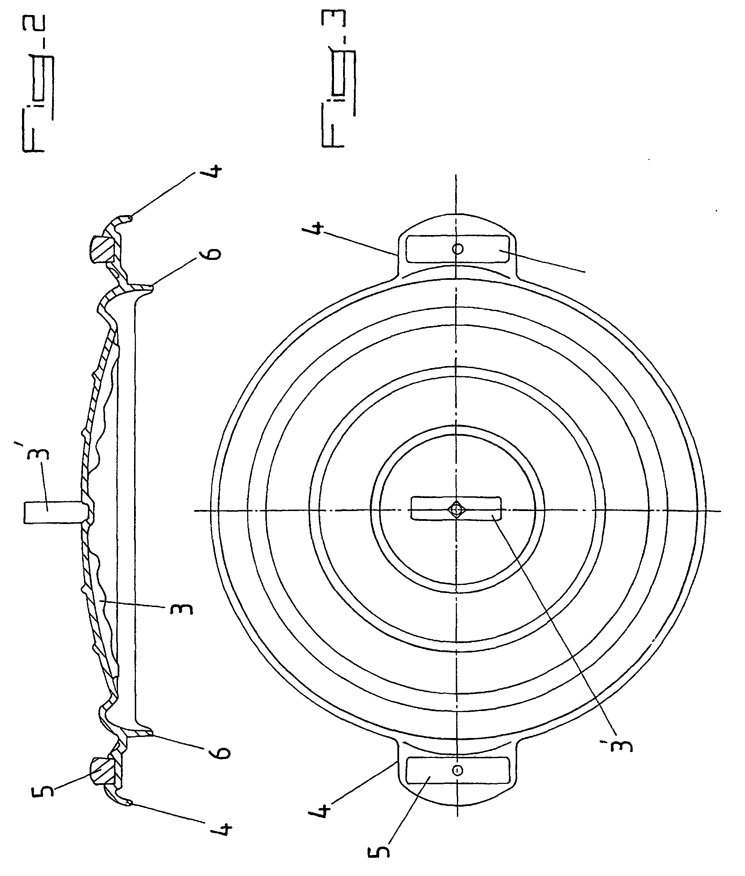

Selon une autre caractéristique de l'invention et comme le montrent plus particulièrement les figures 2 et 3 des dessins annexés, chaque patte formant le moyen 4 de retenue est avantageusement munie, sur sa face supérieure correspondant à la face d'appui contre l'intérieur de l'anse formant la poignée 2, d'une butée transversale 5 en un matériau résilient, tel que du bois ou une matière synthétique rigide. La prévision d'une telle butée transversale 5 permet de réaliser un appui de la patte formant le moyen 4, par ladite butée 5, contre l'intérieur de la poignée 2 de la cocotte en évitant un contact mutuel des parties émaillées de la patte et de la poignée, qui pourrait conduire à une usure de l'émail au niveau de ces deux éléments.

Selon l'invention, le couvercle 2 est pourvu, en outre, sur son bord intérieur, en regard de chaque moyen 4 de retenue, d'un moyen 6 de déviation des condensations vers l'intérieur de la cocotte 1 (Figures 1 et 2).

Ce moyen 6 de déviation des condensations se présente avantageusement sous forme d'un bec en saillie à partir de la face intérieure du couvercle 3, sur le bord de celui-ci et a angle droit par rapport à la face d'appui du couvercle 3 sur la cocotte 1.

Afin de favoriser l'écoulement des condensations lorsque le couvercle 3 est en position accrochée sensiblement à la verticale dans l'une des poignées 2 de la cocotte 1, la surface intérieure du bec formant le moyen 6 présente une incurvation, dont la pente présente un angle supérieur à l'angle d'inclinaison par rapport à la verticale du couvercle 3 fixé dans une poignée 2. Ainsi, dans la position d'ouverture de la cocotte, le couvercle 3 étant maintenu dans une poignée 2 par une patte 4, les condensations ou jus de cuisson, qui se sont formés sur la face intérieure du couvercle 3, peuvent s'écouler en direction du bec formant le moyen 6 de déviation des condensations, situé du côté fixé sur la cocotte 1. Il s'ensuit que ces condensations ou jus de cuisson se concentre dans ledit bec qui permet leur écoulement à l'intérieur de la cocotte.

Grâce à l'invention, il est possible de réaliser un couvercle de cocotte ou analogue pouvant être accroché sur une poignée de ladite cocotte ou analogue, afin de permettre d'intervenir à l'intérieur de ladite cocotte.

Une telle intervention peut ainsi être effectuée sans nécessiter le dépôt du couvercle sur une surface annexe au plan de cuisson, à savoir sur un plan de travail ou autre, de sorte que l'utilisation d'une cocotte ou analogue équipée d'un tel couvercle est particulièrement ergonomique.

Du fait de la possibilité d'accrochage du couvercle 3 sur le bord de la cocotte 1 ou analogue et de la prévision d'un moyen 6 de déviation des condensations sur le bord interne dudit couvercle 3, lesdites condensations ou jus de cuisson, qui ont tendance à s'écouler vers le bas sur la face interne dudit couvercle 3, sont récupérés et dirigés vers l'intérieur de la cocotte 1, de sorte que tout risque de salissure du plan de cuisson, au cours d'une intervention de la cocotte 1, est supprimé. De plus, comme les jus de cuisson sont entièrement récupérés, un risque de dilution de ceux-ci, du fait d'un rajout d'eau ou autre liquide en compensation d'éventuelles pertes, est évité.

Bien entendu, l'invention n'est pas limitée au mode de réalisation décrit et représenté aux dessins annexés. Des modifications restent possibles, notamment du point de vue de la constitution des divers éléments ou par substitution d'équivalents techniques, sans sortir pour autant du domaine de protection de l'invention.

## Revendications

1. Cocotte (1) ou analogue pourvue de poignées latérales (2) et d'un couvercle (3), le couvercle étant muni d'au moins un dispositif (4) de retenue sur ladite cocotte en position d'accès à l'intérieur de celle-ci, le dispositif (4) de retenue du couvercle (3) étant sous forme d'une patte latérale en saillie sur la périphérie dudit couyercle (3) ou de pattes diamétralement opposées par rapport à la poignée (3') du couvercle (3), de section inférieure à la section transversale d'une poignée latérale (2), **caractérisé en ce que** le couvercle (3) est pourvu, en outre, sur son bord intérieur, en regard de chaque moyen (4) de retenue, d'un moyen (6) de déviation des condensations vers l'intérieur de la cocotte (1).

2. Cocotte ou analogue, suivant la revendication 1, **caractérisé en ce que** chaque patte formant le moyen (4) de retenue est munie, sur sa face supérieure correspondant à la face d'appui contre l'intérieur de l'anse formant la poignée (2), d'une butée transversale (5) en un matériau résilient, tel que du bois ou une matière synthétique rigide.

3. Cocotte ou analogue, suivant la revendication 1, **caractérisé en ce que** le moyen (6) de déviation des condensations se présente sous forme d'un bec en saillie à partir de la face intérieure du couvercle (3), sur le bord de celui-ci et a angle droit par rapport à la face d'appui du couvercle (3) sur la cocotte (1).

4. Cocotte ou analogue, suivant l'une quelconque des revendications 1 et 3, **caractérisé en ce que** la surface intérieure du bec formant le moyen (6) présente une incurvation, dont la pente présente un angle supérieur à l'angle d'inclinaison par rapport à la verticale du couvercle (3) fixé dans une poignée (2).

## Patentansprüche

1. Topf (1) oder dergleichen, mit seitlichen Griffen (2) und einem Deckel (3), der mit wenigstens einer Vorrichtung (4) zum Halten des Deckels auf dem Topf in Zugriffsstellung auf dessen Inneres ausgestattet ist, wobei die Haltevorrichtung (4) des Deckels (3) die Form einer vom Umfang des Deckels (3) auskragenden Seitenklaue oder hinsichtlich des Griffes (3') des Deckels (3) diametral gegenüberliegender Klauen mit einem kleineren Querschnitt als das Querprofil eines Seitengriffes (2) aufweist,
**dadurch gekennzeichnet, dass**
der Deckel (3) darüber hinaus am Innenrand gegenüber jedem Haltemittel (4) mit einem Mittel (6) zum Ablenken der Kondensationen ins Innere des Topfes (1) versehen ist.

2. Topf oder dergleichen nach Anspruch 1, **dadurch gekennzeichnet, dass** jede das Haltemittel (4) bildende Klaue auf ihrer Oberseite entsprechend der Abstützfläche gegen das Innere des den Griff (2) bildenden Henkels mit einem Queranschlag (5) aus einem federnden Material wie Holz oder einem steifen Kunststoff ausgestattet ist.

3. Topf oder dergleichen nach Anspruch 1, **dadurch gekennzeichnet, dass** das Kondensationsabienkungsmittel (6) sich in Form eines auskragenden Schnabels von der Innenseite des Deckels (3) weg an dessen Rand und im rechten Winkel hinsichtlich der Abstützfläche des Deckels (3) auf dem Topf (1) darstellt.

4. Topf oder dergleichen nach einem der Ansprüche 1 und 3, **dadurch gekennzeichnet, dass** die Innenfläche des das Mittel (6) bildenden Schnabels eine Krümmung aufweist, deren Gefälle einen Winkel aufweist, der größer ist als der Neigungswinkel hinsichtlich der Vertikalen des in einen Griff (2) eingesteckten Deckels (3).

## Claims

1. Cooking pot (1) or the like provided with lateral handles (2) and a lid (3), the lid (3) being provided with at least one device (4) for holding the lid on said cooking pot in the position in which the interior thereof may be accessed, the holding device (4) of the lid (3) being in the form of a lateral lug protruding on the periphery of said lid (3) or lugs that are diametrically opposed relative to the handle (3') of the lid (3), the handle (3') of the lid (3) being smaller in section than the cross-section of a lateral handle (2), **characterised in that** the lid (3) is also provided, on its lower edge, facing each holding means (4), with a means (6) for diverting condensation into the interior of the cooking pot (1).

2. Cooking pot or the like, according to claim 1, **characterised in that** each lug forming the holding means (4) is provided, on its upper face corresponding to the face bearing against the inside of the loop forming the handle (2), with a transverse stop (5) made of a resilient material, such as wood, or a rigid synthetic material.

3. Cooking pot or the like, according to claim 1, **characterised in that** the means (6) for diverting condensation is in the form of a lip protruding from the inner face of the lid (3), on the edge thereof and at a right angle to the face of the lid (3) bearing on the cooking pot (1).

4. Cooking pot or the like, according to any one of claims 1 and 3, **characterised in that** the inner surface of the lip forming the means (6) has a curvature, the gradient of which is at a greater angle than the angle of inclination relative to the vertical of the lid (3) fixed in a handle (2).
